# EUROPÄISCHE PATENTSCHRIFT

(11) **EP 1 573 187 B1**
(45) Veröffentlichungstag und Bekanntmachung des Hinweises auf die Patenterteilung: **13.12.2006**
(21) Anmeldenummer: 03813072.0
(22) Anmeldetag: 17.10.2003
(51) Int. Cl.: F02D 41/30

(54) **VERFAHREN ZUM STEUERN EINER HCCI-BRENNKRAFTMASCHINE IN AUSNAHMESITUATIONEN**
METHOD FOR CONTROL OF AN HCCI INTERNAL COMBUSTION ENGINE IN EXCEPTIONAL SITUATIONS
PROCEDE POUR COMMANDER UN MOTEUR A COMBUSTION INTERNE HCCI DANS DES CONDITIONS PARTICULIERES

(30) Priorität: 16.12.2002 DE 10258802
(43) Veröffentlichungstag der Anmeldung: 14.09.2005
(73) Patentinhaber: SIEMENS AKTIENGESELLSCHAFT, 80333 München (DE)
(72) Erfinder: WEISS, Frank, 93080 Pentling/Grasslfing (DE)
(86) Internationale Anmeldenummer: PCT/DE2003/003455
(87) Internationale Veröffentlichungsnummer: WO 2004/055350

(56) Entgegenhaltungen:
- EP-A- 1 063 427
- WO-A-02/14665
- US-A- 5 875 743
- US-A1- 2002 007 816
- US-B1- 6 237 562

## Beschreibung

Die vorliegende Erfindung betrifft ein Verfahren zum Steuern des Betriebs einer HCCI-Brennkraftmaschine, die im HCCI-Betriebsmodus oder in einem Betriebsmodus mit Fremdzündung betrieben werden kann und in Abhängigkeit von vorgegebenen Betriebsparametern zwischen diesen Betriebsmodi umgeschaltet wird.

Beim Betrieb einer Brennkraftmaschine im HCCI-Betriebsmodus (Homogenous Charge Compression Ignition), der manchmal auch als CAI (Controlled Auto Ignition), ATAC (Active Thermo Athmosphere Combustion) oder TS (Toyota Soken) bezeichnet wird, erfolgt die Entzündung des Luft-Kraftstoff-Gemisches nicht durch Fremdzündung, sondern durch kontrollierte Selbstzündung.

Der HCCI-Verbrennungsprozess kann beispielsweise durch einen hohen Anteil an heißen Restgasen und/oder durch eine hohe Verdichtung und/oder eine hohe Eintrittslufttemperatur hervorgerufen werden. Voraussetzung für die Selbstzündung ist ein ausreichend hohes Energieniveau im Zylinder. Im HCCI-Betriebsmodus betreibbare Brennkraftmaschinen, bei denen es sich sowohl um Otto- wie auch Dieselmotoren handeln kann, sind bekannt, siehe z. B. US 6260520, US 6390054, DE 199 27 479, WO 98/10179 und US 6 237 562.

Die HCCI-Verbrennung hat gegenüber einer herkömmlichen fremdgezündeten Verbrennung den Vorteil eines reduzierten Kraftstoffverbrauchs und geringerer Schadstoffemissionen. Die Brennkraftmaschine wird daher weitgehend im HCCI-Betriebsmodus betrieben. Allerdings ist dies in bestimmten Betriebsbereichen wie z. B. bei hohen Drehzahlen oder hoher Last nicht möglich, so dass dann in einen Betriebsmodus mit Fremdzündung, insbesondere einen homogen stöchiometrischen Betrieb umgeschaltet werden muss. Die Umschaltung zwischen diesen Betriebsmodi erfolgt unter Berücksichtigung von Größen wie Kraftstoffverbrauch, Schadstoffemissionen und Fahrbarkeit in Abhängigkeit von entsprechenden Betriebsparametern wie z. B. Last und Drehzahl.

Im Betrieb der Brennkraftmaschine kann es allerdings zu Ausnahmesituationen kommen, bei denen diese übliche "Umschaltstrategie" zu einem unzweckmäßigen Betriebsmodus führt.

Der vorliegenden Erfindung liegt die Aufgabe zugrunde, ein Verfahren zum Steuern des Betriebs einer derartigen HCCI-Brennkraftmaschine anzugeben, bei dem auch in Ausnahmesituationen die Einstellung des für diese Ausnahmesituation geeigneten Betriebsmodus sichergestellt wird.

Diese Aufgabe wird durch das in den Patentansprüchen 1 und 3 definierte Verfahren gelöst.

Die vorliegende Erfindung beruht auf der Erkenntnis, dass in bestimmten Ausnahmesituationen im Betrieb der Brennkraftmaschine der HCCI-Betriebsmodus entweder vermieden oder aber erzwungen werden muss, um durch die Ausnahmesituation bedingte Fehlfunktionen und Schäden zu vermeiden.

Gemäß einer Alternative ist erfindungsgemäß vorgesehen, dass ein Betrieb der Brennkraftmaschine im HCCI-Betriebsmodus verhindert wird, wenn mindestens eines der folgenden Ereignisse eintritt:
a) der Unterdruck in einem Unterdruckbehälter einer zugehörigen Bremsanlage ist aufgrund eines zu hohen Drucks im Ansaugtrakt der Brennkraftmaschine kleiner als ein Grenzwert;
b) die Spülrate eines Tankentlüftungsventils einer zugehörigen Tankentlüftungsanlage der Brennkraftmaschine ist aufgrund eines zu hohen Drucks im Ansaugtrakt der Brennkraftmaschine kleiner als ein Grenzwert;
c) die Temperatur des Kühlwassers eines Kühlkreises der Brennkraftmaschine ist kleiner als ein Mindestwert;
d) die Messung der Luftmasse und/oder des Drucks im Ansaugtrakt der Brennkraftmaschine ist fehlerhaft;
e) die Zündung des Luft-Kraftstoff-Gemisches und/oder die Kraftstoffeinspritzung ist fehlerhaft;
f) es treten Zündaussetzer oder eine starke Laufunruhe der Brennkraftmaschine auf;
g) eine Sicherheitseinrichtung zum Überwachen der Steuerungsfunktionen der Brennkraftmaschine stellt einen Systemfehler fest.

Befindet sich die Brennkraftmaschine im HCCI-Betriebsmodus, wenn eines der Ereignisse a) bis g) eintritt, so wird in einen Betriebsmodus mit Fremdzündung, beispielsweise in einen homogen stöchiometrischen oder homogen mageren Betrieb, umgeschaltet. Befindet sich die Brennkraftmaschine bereits in einem Betriebszustand mit Fremdzündung, wenn eines der Ereignisse a) bis g) eintritt, so wird ein Umschalten in den HCCI-Betriebsmodus verhindert.

Gemäß der zweiten Alternative ist erfindungsgemäß vorgesehen, dass ein Betrieb der Brennkraftmaschine im HCCI-Betriebsmodus erzwungen wird, wenn mindestens eines der folgenden Ereignisse eintritt:
a) die Rückführrate einer Abgasrückführung der Brennkraftmaschine ist aufgrund einer Fehlfunktion größer als ein Grenzwert;
b) das Luft-Kraftstoff-Verhältnis (λ) ist trotz abgeschalteter Kraftstoffeinspritzung kleiner als 1.

Durch die erfindungsgemäßen Maßnahmen wird verhindert, dass bei den angegebenen Ausnahmesituationen Fehlfunktionen und Schädigungen der Brennkraftmaschine sowie Gefährdungszustände auftreten.

Anhand der Zeichnungen werden weitere Einzelheiten des erfindungsgemäßen Verfahrens erläutert. Es zeigt:
Fig. 1 eine schematische Darstellung einer HCCI-Brennkraftmaschine;
Fig. 2 ein Flussdiagramm eines Verfahrens zum Verhindern eines HCCI-Betriebs in bestimmten Ausnahmesituationen;
Fig. 3 ein Flussdiagramm eines Verfahrens zum Erzwingen eines HCCI-Betriebs in bestimmten Ausnahmesituationen.

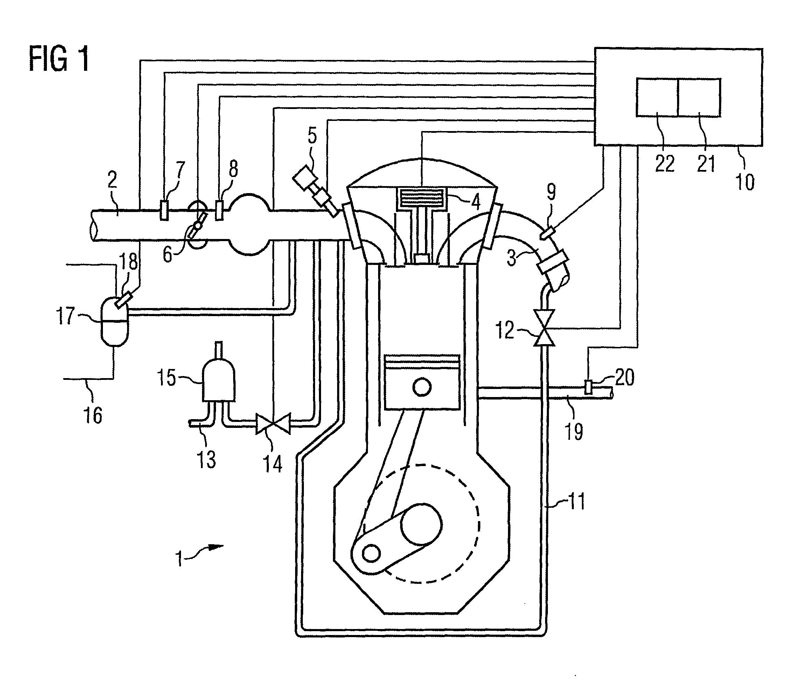

Die Fig. 1 zeigt in stark schematisierter Weise eine Brennkraftmaschine 1 der Kolbenbauart vom Otto-Typ mit mindestens einem Zylinder, einem Ansaugtrakt 2, einem Abgastrakt 3, einem Einlassventil, einem Auslassventil, einer Zündeinrichtung 4, einem Kraftstoffeinspritzventil 5 und einem Drosselventil 6. Im Ansaugtrakt 2 sind Sensoren 7, 8 zum Erfassen der Luftmasse bzw. des Drucks im Ansaugtrakt angeordnet. Ein Sensor 9 in Form einer Lambda-Sonde ist im Abgastrakt 3 angeordnet, um das Luft-Kraftstoff-Verhältnis (λ) zu erfassen.

Der Brennkraftmaschine 1 ist ein elektronisches Betriebssteuergerät 10 zugeordnet, das Messsignale von den Sensoren 7 bis 9 sowie weiteren (nicht dargestellten) Sensoren empfängt und Stellsignale an die Zündeinrichtung 4, das Kraftstoffeinspritzventil 5 und das Drosselventil 6 sowie weitere Aktoren der Brennkraftmaschine abgibt.

In Fig. 1 sind noch einige weitere Komponenten der Brennkraftmaschine, die für die vorliegende Erfindung von Bedeutung sind, schematisch angedeutet, und zwar eine Abgasrückführanlage 11 mit einem Abgasrückführventil 12, eine Bremsanlage 16 mit einem Unterdruckbehälter 17 und einem den Unterdruck im Unterdruckbehälter 17 erfassenden Drucksensor 18 sowie eine Tankentlüftungsanlage 13 mit einem Tankentlüftungsventil 14 und einem Aktivkohlebehälter 15.

Die Brennkraftmaschine 1 ist als HCCI-Brennkraftmaschine ausgebildet, die unter der Steuerung des elektronischen Betriebssteuergerätes 10 normalerweise im HCCI-Betriebsmodus betrieben wird und in Abhängigkeit von bestimmten Betriebsparametern (z.B. Drehzahl und Last) bei bestimmten Betriebszuständen (z.B. hohe Drehzahl oder hohe Last) in einen Betrieb mit Fremdzündung umgeschaltet wird. Da derartige Verfahren zum Steuern des Betriebs der Brennkraftmaschine 1 (z. B. aus den eingangs genannten Druckschriften) bekannt sind, wird hierauf nicht näher eingegangen.

Unabhängig von den bei normalem Betrieb der Brennkraftmaschine auftretenden Betriebszuständen können jedoch Ausnahmesituationen eintreten, die zu einer ernsthaften Störung führen würden, falls nicht mittels des erfindungsgemäßen Verfahrens eingegriffen wird.

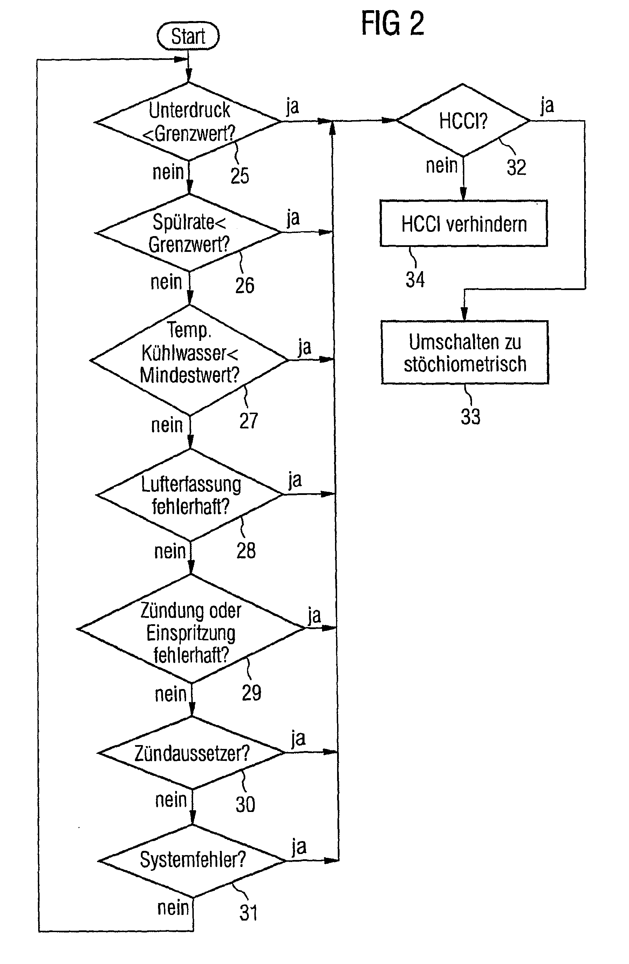

So gibt es Ausnahmesituationen, bei denen ein Betrieb der Brennkraftmaschine 1 im HCCI-Betriebsmodus zu Fehlfunktionen und größeren Schäden führen kann. Das erfindungsgemäße Verfahren, das nun anhand des Diagramms der Fig. 2 näher erläutert wird, verhindert einen HCCI-Betriebsmodus, wenn es zu mindestens einer der folgenden Ausnahmesituationen kommt:
a) Niedriger Unterdruck im Unterdruckbehälter 17: Für den HCCI-Betriebsmodus ist ein relativ großer Druck im Ansaugtrakt 2 erforderlich, d.h., dass das Drosselventil 6 im wesentlichen unabhängig vom Fahrerwunsch (Pedalstellung) weit geöffnet ist. Unter bestimmten Betriebszuständen kann dies dazu führen, dass der am Ansaugtrakt 2 angeschlossene Unterdruckbehälter 17 zur Bremsunterstützung der Bremsanlage 16 nicht mehr ausreichend entlüftet werden kann.
   Wenn daher der mittels des Drucksensors 18 erfasste Unterdruck im Unterdruckbehälter 17 kleiner als ein vorgegebener Grenzwert ist (Schritt 25), wird der homogen stöchiometrische Betriebsmodus eingestellt (Schritt 33).
   Ist der Unterdruck im Unterdruckbehälter 17 größer als der Grenzwert, so geht das Programm zum nächsten Schritt 26 weiter.
b) Tankentlüftung: Der im HCCI-Betriebsmodus eingestellte hohe Druck im Ansaugtrakt 2 kann ferner dazu führen, dass die Spülrate des Tankentlüftungsventils 14 so niedrig wird, dass der Kraftstofftank (nicht gezeigt) nicht mehr ausreichend entlüftet wird. Da die Spülrate des Tankentlüftungsventils 14 mittels eines Modells von dem elektronischen Betriebssteuergerät 10 ohnehin ständig überwacht wird, lässt sich die Spülrate mit einem Grenzwert vergleichen. Ist die Spülrate kleiner als der Grenzwert (Schritt 26), so wird zum homogen stöchiometrischen oder auch homogen mageren Betrieb übergegangen (Schritt 33).
   Anderenfalls geht das Programm zum Schritt 27 weiter.
c) Fahrzeuginnenraumheizung: Im HCCI-Betriebsmodus ergibt sich in bestimmten Betriebsbereichen eine erhebliche Verbesserung des Wirkungsgrades der Brennkraftmaschine. Es steht dann nicht mehr so viel Abwärme zum Aufheizen des Kühlwassers der Kühlanlage 19 zur Verfügung. Bei niedrigen Außentemperaturen erwärmt sich dann das Kühlwasser nur relativ langsam, was die Funktion der Fahrzeuginnenraumheizung entsprechend beeinträchtigt. Wenn daher die mittels des Temperaturfühlers 20 gemessene Temperatur des Kühlwassers nicht auf einen Mindestwert ansteigt (Schritt 27), wird auf den homogen stöchiometrischen Betrieb umgeschaltet (Schritt 33).
   Anderenfalls schreitet das Programm zum Schritt 28 fort.
d) Sensorfehler: Wenn die Lufterfassung mittels des Luftmassen-Sensors 7 und/oder des Druck-Sensors 8 im Ansaugtrakt 2 fehlerhaft ist, ist eine drehmomentenneutrale Umschaltung zwischen dem HCCI-Modus und einem Betriebsmodus mit Fremdzündung nicht mehr möglich. Um nämlich einen Drehmomentensprung bei einer derartigen Umschaltung zu vermeiden, müssen exakte Werte für den Luftmassenstrom bzw. den Druck im Ansaugtrakt 2 zur Verfügung stehen.
   Falls daher die Lufterfassung fehlerhaft ist (Schritt 28), wird die Brennkraftmaschine im homogen stöchiometrischen Betriebsmodus betrieben. Hierzu wird zunächst festgestellt, ob sich die Brennkraftmaschine im HCCI-Betriebsmodus befindet (Schritt 32). Ist dies der Fall, so wird auf den homogenstöchiometrischen Betriebsmodus umgeschaltet (Schritt 33). Ist die Brennkraftmaschine bereits in einem Betriebsmodus mit Fremdzündung, so wird das Umschalten in den HCCI-Betriebsmodus verhindert (Schritt 34).
e) Fehlerhafte Zündung oder Kraftstoffeinspritzung: Wenn die Zündung (Zündeinrichtung 4) und/oder die Kraftstoffeinspritzung (Einspritzventil 5) fehlerhaft arbeiten, d. h., wenn die entsprechenden Istwerte der Zündung bzw. Einspritzung mit den vorgegebenen Sollwerten nicht in Übereinstimmung zu bringen sind, ist ebenfalls eine drehmomentenneutrale Umschaltung zwischen dem HCCI-Betriebsmodus und einem Betriebsmodus mit Fremdzündung nicht mehr möglich oder zumindest deutlich erschwert. Auch in diesem Fall wird daher ausschließlich der homogen stöchiometrische Betrieb aktiviert (Schritte 29 und 32 bis 34).
f) Verbrennungsaussetzer und starke Laufunruhe: Das elektronische Betriebssteuergerät 10 enthält üblicherweise eine Einrichtung 21 zum Erkennen von Verbrennungsaussetzern bzw. Zum Überwachen der Laufruhe der Brennkraftmaschine. Treten beispielsweise in bestimmten Drehzahl- bzw. Lastbereichen Verbrennungsaussetzer bzw. eine große Laufunruhe auf, so ist auch in diesen Betriebsbereichen ein einwandfreier Betrieb im HCCI-Modu nicht mehr gewährleistet. Auch in diesen Fällen ist daher der HCCI-Betriebsmodus zumindest in diesen Drehzahl- bzw. Lastbereichen zu vermeiden (Schritte 30 und 32 bis 34).
g) Sicherheitskonzept: Das elektronische Betriebssteuergerät ist üblicherweise mit einer Sicherheitseinrichtung 22 zum Überwachen der Steuerungsfunktionen der Brennkraftmaschine versehen (Sicherheitskonzept). Wenn aufgrund eines Systemfehlers die Überwachung des HCCI-Betriebsmodus nicht mehr korrekt funktioniert, muss der HCCI-Betriebsmodus vermieden werden. Ein sicherer Betrieb der Brennkraftmaschine wäre andernfalls nicht mehr gewährleistet. So besteht beispielsweise die Gefahr, dass es aufgrund des im HCCI-Betrieb weit geöffneten Drosselventils 6 zu einer ungewollten Beschleunigung des Fahrzeuges kommt, wenn z.B. im HCCI-Betriebsmodus, wie durch eine Plausibilitätsprüfung festgestellt, die Abgasrückführrate oder die eingespritzte Kraftstoffmenge nicht plausibel ist und die Zündung weiterbetrieben wird. Falls somit die Sicherheitseinrichtung 22 einen Systemfehler erkennt (Schritt 31), wird der HCCI-Betriebsmodus von vornherein verhindert (Schritt 34).

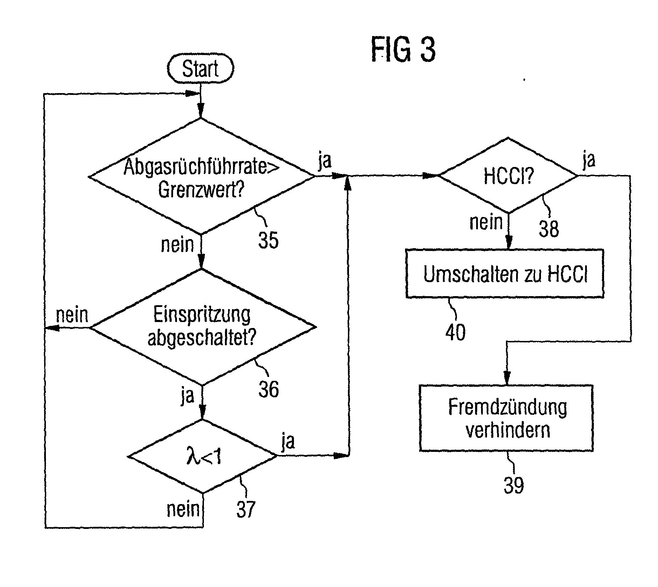

Bei den oben beschriebenen Vorgängen wurde entweder eine Umschaltung aus dem HCCI-Betriebsmodus in einen Betriebsmodus mit Fremdzündung erzwungen oder eine Umschaltung in den HCCI-Betriebsmodus verhindert. Dagegen gibt es Ausnahmesituationen, bei denen der HCCI-Betriebsmodus eingestellt werden sollte, was dann erfindungsgemäß erzwungen wird. Dies wird nun anhand des Flussdiagrams der Fig. 3 erläutert.
a) Externe Abgasrückführung: Wenn es zu einer ungewollt großen Abgasrückführrate kommt, z. B. durch ein in der Offenstellung klemmendes Abgasrückführventil 12 oder eine fehlerhafte Steuerung des Abgasrückführventils 12, ist ein kontrollierter Betrieb mit Fremdzündung, insbesondere ein homogen stöchiometrischer Betrieb, nicht mehr möglich, da der Verbrennungsvorgang instabil wird. Wenn somit die Abgasrückführrate größer als ein Grenzwert wird (Schritt 35), wird zunächst festgestellt, ob sich die Brennkraftmaschine im HCCI-Betriebsmodus befindet (Schritt 38). Ist dies der Fall, so wird ein Übergang zu einem Betriebsmodus mit Fremdzündung verhindert (Schritt 39). Befindet sich die Brennkraftmaschine dagegen in einem Betriebsmodus mit Fremdzündung, insbesondere im homogen-stöchiometrischen Betrieb, so wird auf den HCCI-Betriebsmodus umgeschaltet (Schritt 40).
   Ist die Abgasrückführrate dagegen kleiner als der Grenzwert, so schreitet das Programm zum Schritt 36 fort.
b) Tankentlüftung: Wenn das Tankentlüftungsventil 14 in der Offenstellung klemmt und der Druck im Ansaugtrakt 2 (bei kleiner Last) niedrig ist, kann aufgrund der eingesaugten Kraftstoffdämpfe ein Luft-Kraftstoff-Verhältnis entstehen, das trotz abgeschalteter Kraftstoffeinspritzung kleiner als 1 ist. Ist dies der Fall (Schritte 36 und 37), so wird die Brennkraftmaschine im HCCI-Modus betrieben (Schritte 38 bis 40), sofern dies nicht ohnehin der Fall ist.

## Patentansprüche

1. Verfahren zum Steuern des Betriebs einer HCCI-Brennkraftmaschine, die im HCCI-Betriebsmodus oder in einem Betriebsmodus mit Fremdzündung betrieben werden kann und bei normalem Betrieb in einem vorgegebenen Umschaltverfahren in Abhängigkeit von vorgegebenen Betriebsparametern zwischen diesen Betriebsmodi umgeschaltet wird, **dadurch gekennzeichnet, dass** unabhängig von dem vorgegebenen Umschaltverfahren ein Betrieb der Brennkraftmaschine (1) im HCCI-Betriebsmodus verhindert wird, wenn mindestens eine der folgenden Ausnahmesituationen eintritt:
a) der Unterdruck in einem Unterdruckbehälter (15) einer zugehörigen Bremsanlage (13) ist aufgrund eines zu hohen Drucks im Ansaugtrakt (2) der Brennkraftmaschine kleiner als ein Grenzwert;
b) die Spülrate eines Tankentlüftungsventils (14) einer zugehörigen Tankentlüftungsanlage (13) der Brennkraftmaschine (1) ist kleiner als ein Grenzwert;
c) die Temperatur des Kühlwassers eines Kühlkreises (19) der Brennkraftmaschine (1) ist kleiner als ein Mindestwert;
d) die Messung der Luftmasse und/oder des Drucks im Ansaugtrakt (2) der Brennkraftmaschine (1) ist fehlerhaft;
e) die Zündung des Luft-Kraftstoff-Gemisches und/oder die Kraftstoffeinspritzung ist fehlerhaft;
f) es treten Zündaussetzer oder eine starke Laufunruhe der Brennkraftmaschine (1) auf;
g) eine Sicherheitseinrichtung (21) zum Überwachen der Steuerungsfunktionen der Brennkraftmaschine (1) stellt einen Systemfehler fest.

2. Verfahren nach Anspruch 1, **dadurch gekennzeichnet, dass** die Brennkraftmaschine (1), wenn sie im HCCI-Betriebsmodus betrieben wird und mindestens eines der Ereignisse a) bis g) eintritt, auf einen fremdgezündeten Betrieb umgeschaltet wird.

3. Verfahren zum Steuern des Betriebes einer HCCI-Brennkraftmaschine, die im HCCI-Betriebsmodus oder in einem Betriebsmodus mit Fremdzündung betrieben werden kann und bei normalem Betrieb in einem vorgegebenen Umschaltverfahren in Abhängigkeit von vorgegebenen Betriebsparametern zwischen diesen Betriebsmodi umgeschaltet wird, **dadurch gekennzeichnet, dass** unabhängig von dem vorgegebenen Umschaltverfahren ein Betrieb der Brennkraftmaschine (1) im HCCI-Betriebsmodus erzwungen wird, wenn mindestens eine der folgenden Ausnahmesituationen eintritt:
a) die Rückführrate einer externen Abgasrückführung der Brennkraftmaschine (1) ist aufgrund einer Fehlfunktion größer als ein Grenzwert;
b) das Luft-Kraftstoff-Verhältnis (λ) ist trotz abgeschalteter Kraftstoffeinspritzung kleiner als 1.

## Claims

1. Method for controlling the operation of an HCCI internal combustion engine which can be operated in the HCCI operating mode or in an operating mode using externally applied (spark) ignition and during normal operation in a predefined switchover method is switched between said operating modes as a function of predefined operating parameters, **characterised in that**, irrespective of the predefined switchover method, operation of the internal combustion engine (1) in the HCCI operating mode is prevented if at least one of the following exceptional situations occurs:
a) the vacuum in a vacuum reservoir (15) of an associated braking system (13) is less than a limit value due to an excessively high pressure in the intake duct (2) of the internal combustion engine (1);
b) the scavenge rate of a fuel tank venting valve (14) of an associated fuel tank venting system (13) of the internal combustion engine (1) is less than a limit value;
c) the temperature of the coolant of a cooling circuit (19) of the internal combustion engine (1) is less than a minimum value;
d) the measurement of the air mass and/or the pressure in the intake duct (2) of the internal combustion engine (1) is defective;
e) the ignition of the air-fuel mixture and/or the fuel injection is defective;
f) misfires or extremely uneven running of the internal combustion engine (1) occur;
g) a safety device (21) for monitoring the control functions of the internal combustion engine (1) detects a system error.

2. Method according to claim 1, **characterised in that** the internal combustion engine (1), if it is being operated in the HCCI operating mode and at least one of the events a) to g) occurs, will be switched over to an operating mode using externally applied (spark) ignition.

3. Method for controlling the operation of an HCCI internal combustion engine which can be operated in the HCCI operating mode or in an operating mode using externally applied (spark) ignition and during normal operation in a predefined switchover method is switched between said operating modes as a function of predefined operating parameters, **characterised in that**, irrespective of the predefined switchover method, operation of the internal combustion engine (1) in the HCCI operating mode is enforced if at least one of the following exceptional situations occurs:
a) the recirculation rate of an external exhaust gas recirculation system of the internal combustion engine (1) is greater than a limit value as a result of a malfunction;
b) the air-fuel ratio (λ) is less than 1 in spite of the fuel injection being switched off.

## Revendications

1. Procédé pour commander le fonctionnement d'un moteur à combustion interne HCCI qu'on peut faire fonctionner dans le mode de fonctionnement HCCI ou dans un mode de fonctionnement à allumage commandé et qui, en fonctionnement normal, est commuté entre ces modes de fonctionnement selon une procédure de commutation prédéterminée, en fonction de paramètres de fonctionnement prédéterminés, **caractérisé en ce qu'**indépendamment de la procédure de commutation prédéterminée, un fonctionnement du moteur à combustion interne (1) dans le mode de fonctionnement HCCI est interdit lorsqu'au moins une des situations exceptionnelles suivantes se présente :
a) la dépression dans un réservoir de dépression (15) appartenant à une installation de freinage correspondante (13) est inférieure à une valeur limite par suite d'une pression trop élevée dans la tubulure d'admission (2) du moteur à combustion interne ;
b) le débit de sortie d'une soupape de dégazage du réservoir (14) appartenant à une installation correspondante de dégazage du réservoir (13) du moteur à combustion interne (1) est inférieur à une valeur limite ;
c) la température de l'eau de refroidissement d'un circuit de refroidissement (19) du moteur à combustion interne (1) est inférieure à une valeur minimale ;
d) la mesure de la masse d'air et/ou de la pression dans la tubulure d'admission (2) du moteur à combustion interne (1) est défectueuse ;
e) l'allumage du mélange air-carburant et/ou l'injection de carburant est ou sont défectueuses ;
f) il se manifeste des ratés d'allumage ou une forte irrégularité de marche du moteur à combustion interne (1) ;
g) un dispositif de sécurité (21) destiné à surveiller les fonctions de commande du moteur à combustion interne (1) constate un défaut du système.

2. Procédé selon la revendication 1, **caractérisé en ce que**, lorsqu'on le fait fonctionner dans le mode de fonctionnement HCCI, et qu'il se produit au moins des évènements a) à g), le moteur à combustion interne (1) est commuté sur un fonctionnement à allumage commandé.

3. Procédé pour commander le fonctionnement d'un moteur à combustion interne HCCI qu'on peut faire fonctionner dans le mode de fonctionnement HCCI ou dans le mode de fonctionnement à allumage commandé et qui, en fonctionnement normal, est commuté entre ces modes de fonctionnement selon une procédure de commutation prédéterminée, en fonction de paramètres de fonctionnement prédéterminés, **caractérisé en ce qu'**indépendamment de la procédure de commutation prédéterminée, un fonctionnement du moteur à combustion interne (1) dans le mode de fonctionnement HCCI est forcé lorsqu'au moins une des situations exceptionnelles suivantes se présente : a) le débit de recyclage d'un circuit de recyclage des gaz d'échappement du moteur à combustion interne (1) est supérieur à une valeur limite par suite d'un fonctionnement défectueux ;
b) le rapport air-carburant (λ) est inférieur à 1 en dépit de la mise à l'arrêt de l'injection de carburant.
